# EUROPÄISCHE PATENTSCHRIFT

(11) **EP 3 447 593 B1**
(45) Veröffentlichungstag und Bekanntmachung des Hinweises auf die Patenterteilung: **01.03.2023**
(21) Anmeldenummer: 17187832.5
(22) Anmeldetag: 24.08.2017
(51) Int. Cl.: G05B 19/418, H04B 3/54

(54) **SICHERHEITSSTEUERUNG UND FELDGERÄTE ZUM GEMÄSS EINER SICHERHEITSNORM SICHEREN ÜBERTRAGEN VON DATENTELEGRAMMEN**
SAFETY CONTROLLER AND FIELD DEVICES FOR SECURELY TRANSMITTING DATA TELEGRAMS IN ACCORDANCE WITH A SAFETY STANDARD
CONTRÔLEUR DE SÉCURITÉ ET APPAREILS DE TERRAIN POUR UNE TRANSMISSION SÉCURISÉE, CONFORMÉMENT À UNE NORME DE SÉCURITÉ, DE TÉLÉGRAMMES DE DONNÉES

(43) Veröffentlichungstag der Anmeldung: 27.02.2019
(73) Patentinhaber: Wieland Electric GmbH, 96052 Bamberg (DE)
(72) Erfinder: Uygur, Sinan, 91301 Forchheim (DE)
(74) Vertreter: 2K Patentanwälte Blasberg Kewitz & Reichel

(56) Entgegenhaltungen:
- DE-A1-102010 037 262
- US-A1- 2005 055 586
- US-A1- 2008 273 613
- US-A1- 2015 280 784

## Beschreibung

Die Erfindung betrifft ein Verfahren zum gemäß einer Sicherheitsnorm sicheren Übertragen von Datentelegrammen zwischen einem Sender und einem Empfänger, wobei Sender und Empfänger an eine gemeinsame Stromversorgung angeschlossen sind und das Datentelegramm vom Sender über eine Trägerfrequenz auf eine Spannung zwischen zwei Leitungen der Stromversorgung moduliert wird, und vom Empfänger wieder demoduliert wird. Sie betrifft weiter ein Adaptersystem, umfassend einen Stromversorgungsanschluss an eine Stromversorgung und eine Modulationsvorrichtung, ausgebildet zum Modulieren eines Datentelegramms über eine Trägerfrequenz auf eine Spannung zwischen zwei Leitungen des Stromversorgungsanschlusses und/oder ausgebildet zum Demodulieren eines Datentelegramms über eine Trägerfrequenz aus einer Spannung zwischen zwei Leitungen des Stromversorgungsanschlusses. Sie betrifft noch weiter eine Sicherheitssteuerung, ausgebildet zum gemäß einer Sicherheitsnorm sicheren Ein- und Ausschalten eines elektrischen Verbrauchers, sowie ein Feldgerät für eine Automatisierungsanlage.

US 2008/273613 A1 und US2015/280784 A1 offenbaren jeweils ein Verfahren, um Daten zwischen Rechnern oder Haushaltgeräten über verschiedene Leitungspaare einer PLC (Power Line Communication) zu übertragen. Diese Druckschriften sind aber gattungsfremd, da sie keine funktional sichere Fernkommunikation (im Sinne einer überwachten Redundanz) einer industrielle Automatisierungsanlage betreffen.

Im industriellen Bereich besteht bei Maschinen und deren Steuerung häufig der Bedarf nach einer Sicherheitsfunktion, d.h. einer Sicherstellung einer störungsfreien und insbesondere gefahrenfreien Funktion von Maschinen, die Gefahrenpotential für Mensch und Material bergen, d.h. z.B. Förderbänder, Pressen, Fräswerkzeuge etc. Hierzu werden derartige Maschinen in der Regel über eine Sicherheitssteuerung gesteuert, die zur Erfüllung der einschlägigen Sicherheitsnormen ausgelegt sind. Die wichtigsten Normen im Bereich der Maschinensicherheit sind die IEC 61508, die EN 62061 und die EN ISO 13849-1. In Bezug auf Sicherheitssteuerungen stellt sich dabei die Frage der sicheren Übertragung von Datentelegrammen, z.B. zwischen einzelnen Modulen der Sicherheitssteuerung, sofern diese modular aufgebaut ist, als auch von Gebern, die Eingangssignale für die Steuerung liefern, und zu Aktoren, die die Schaltsignale der Sicherheitssteuerung ausführen. Dabei sind die Geber und Aktoren in einer Industrieanlage häufig im Feld angeordnet, d.h. außerhalb von Schaltschränken und Leitwarten. Diese müssen dann über separate Datenleitungen angeschlossen werden, was je nach Größe der Anlage einen erheblichen Verkabelungsaufwand bedeuten kann.

Im Bereich der Feldbustechnik wurden daher Techniken entwickelt, um steuerungsrelevante Datentelegramme über bereits vorhandene Leitungen einer Stromversorgung der Feldgeräte zu senden und zu empfangen. Dies ist durch Nutzung der Trägerfrequenztechnik möglich: Die Datentelegramme werden in geeignet aufbereiteter Signalform durch eine Modulationsvorrichtung vom Sender über eine Trägerfrequenz auf eine Spannung zwischen zwei Leitungen der Stromversorgung aufmoduliert. Der Empfänger demoduliert die Signalform mit einer ebensolchen Modulationsvorrichtung und erhält so das Datentelegramm. Entsprechende Techniken hierfür sind dem Fachmann bekannt.

Ein Beispiel für eine derartige Technik ist der SIMATIC Power Rail Booster der Siemens AG. Hierbei werden Signale des Feldbusstandards PROFIBUS DP auf einen Schleifleiter eingekoppelt. Um dabei auch eine im Sinne der eingangs genannten Normen sichere Datenkommunikation zu ermöglichen, kann die PROFIsafe-Technologie verwendet werden, die auf dem PROFIBUS-Standard aufbaut. Diese stellt eine weitere Schicht oberhalb des PROFIBUS bereit und erfüllt die besonderen Anforderungen der eingangs genannten Normen an die funkionale Sicherheit über komplexe zusätzliche Verfahren wie z.B. eine fortlaufende Nummerierung von Datentelegrammen, die Vorgabe einer Zeiterwartung mit Quittierung, eine Kennung für Sender und Empfänger oder eine zusätzliche Datensicherung per CRC (Cyclic Redundancy Check).

Es ist daher Aufgabe der Erfindung, ein Verfahren und ein Adaptersystem der eingangs genannten Art anzugeben, welche die sichere Übertragung von Datentelegrammen auf technisch besonders einfache Weise erlauben.

Diese Aufgabe wird bezüglich des Verfahrens erfindungsgemäß dadurch gelöst, dass vom Sender zwei redundante Versionen des Datentelegramms bereitgestellt werden, die Stromversorgung mindestens drei Leitungen umfasst, und die erste Version des Datentelegramms auf eine Spannung zwischen einer ersten Leitung und einer zweiten Leitung der Stromversorgung moduliert wird, und die zweite Version des Datentelegramms auf eine Spannung zwischen einer dritten Leitung und einer beliebigen weiteren Leitung der Stromversorgung moduliert wird.

Bezüglich des Adaptersystems wird die Aufgabe dadurch gelöst, dass die Stromversorgung mindestens drei Leitungen umfasst, und die Modulationsvorrichtung dazu ausgebildet ist, eine erste von zwei redundanten Versionen eines Datentelegramms auf eine Spannung zwischen einer ersten Leitung und einer zweiten Leitung der Stromversorgung zu modulieren und/oder aus einer solchen Spannung zu demodulieren, und eine zweite Version des Datentelegramms auf eine Spannung zwischen einer dritten Leitung und einer beliebigen weiteren Leitung der Stromversorgung zu modulieren und/oder aus einer solchen Spannung zu demodulieren.

Die Erfindung geht dabei von der Überlegung aus, dass die hohe Komplexität der sicheren Datenübertragung im Wege der Trägerfrequenztechnik dadurch vermieden werden könnte, wenn einfachere, z.B. hardwarebasierte Mechanismen anstatt komplexer Datenprotokolle verwendet werden könnten. Mit anderen Worten: Die funktionale Sicherheit sollte nicht auf den oberen Schichten 5 bis 7 des OSI-Schichtmodells gewährleistet werden, wie dies z.B. bei PROFIBUS DP erfolgt, sondern bereits auf Basis des Übertragungsmediums, d.h. auf den Schichten 1 und 2 des OSI-Schichtenmodells. Hierfür sollten Methoden wie die überwachte Redundanz angewandt werden, bei der die zu übertragenden Daten redundant erzeugt werden (z.B. indem ein Sensor zwei unabhängige Datenquellen bereithält), die zu redundanten Versionen des jeweiligen Datentelegramms führen. Die redundanten Daten sollten dabei auf separaten Hardwarekanälen übertragen werden und zyklisch auf Plausibilität geprüft werden. Hierbei wurde erkannt, dass sich die Architektur vieler Stromversorgungssysteme hierfür nutzen lässt: Eine Stromversorgung umfasst nämlich üblicherweise eine Mehrzahl von Leitungen, in der Regel mindestens drei, z.B. Außenleiter, Neutralleiter und Schutzleiter. Dadurch stehen mehrere unabhängige Potentialdifferenzen oder Spannungen zur Verfügung, auf die das Datentelegramm aufmoduliert werden kann. In einer derartigen Architektur sollte die erste Version des Datentelegramms auf eine Spannung zwischen einer ersten Leitung und einer zweiten Leitung der Stromversorgung moduliert werden, und die zweite Version des Datentelegramms auf eine Spannung zwischen einer dritten Leitung und einer beliebigen weiteren Leitung der Stromversorgung moduliert werden. Die beliebige Leitung muss dabei von der dritten Leitung unterschiedlich sein - sonst wäre keine Spannung ermittelbar. Mit anderen Worten: Es werden unterschiedliche Leitungen für die unterschiedlichen redundanten Versionen eines Datentelegramms verwendet.

In einer ersten vorteilhaften Ausgestaltung des Verfahrens bzw. des Adaptersystems ist die Stromversorgung als Einphasenwechselstromversorgung ausgelegt. Dabei ist und die erste Leitung ein Außenleiter, die zweite Leitung ein Neutralleiter, die dritte Leitung ein Schutzleiter, und die beliebige weitere Leitung ebenfalls der Außenleiter. Mit anderen Worten: In einer Einphasenwechselstromversorgung wird die erste Version eines redundanten Datentelegramms vorteilhafterweise auf das Potential zwischen Außenleiter und Neutralleiter, die zweite Version auf das Potential zwischen Außenleiter und Schutzleiter moduliert bzw. von dort demoduliert. Hierdurch ergeben sich unabhängige Signalkanäle für die redundanten Signale.

In einer zweiten vorteilhaften Ausgestaltung des Verfahrens bzw. des Adaptersystems ist die Stromversorgung als Dreiphasenwechselstromversorgung ausgelegt. Dabei ist die erste Leitung ein erster Außenleiter, die zweite Leitung ein zweiter Außenleiter, die dritte Leitung ein dritter Außenleiter, und die beliebige weitere Leitung ein Neutralleiter. Mit anderen Worten: In einer Dreiphasenwechselstromversorgung wird die erste Version eines redundanten Datentelegramms vorteilhafterweise auf das Potential zwischen zwei Außenleitern, die zweite Version auf das Potential zwischen dem verbleibenden Außenleiter und dem Neutralleiter moduliert bzw. von dort demoduliert. Auch hier ergeben sich auf diese Weise unabhängige Signalkanäle für die redundanten Signale.

In einer weiteren, alternativen oder zusätzlichen vorteilhaften Ausgestaltung wird vom Sender vor dem Modulieren und/oder vom Empfänger nach dem Demodulieren eine Plausibilitätskontrolle der redundanten Signale durchgeführt. Das Adaptersystem ist vorteilhafterweise entsprechend ausgelegt. Plausibilitätskontrolle bedeutet in diesem Zusammenhang allgemein, dass die beiden Datentelegramme einen schalttechnisch identischen Informationsgehalt haben, d.h. dass z.B. beide Datentelegramme einen identischen Schaltzustand eines Schalters anzeigen. Tun sie dies nicht, muss notgedrungen ein Fehler vorliegen, da der Schalter nur einen einzigen Schaltzustand haben kann.

Dass zwei Versionen eines Datentelegramms redundant sind und damit den gleichen Informationsgehalt haben sollen, bedeutet dabei allerdings nicht zwingend, dass die Datentelegramme identisch sind. In der Sicherheitstechnik können nämlich z.B. auch antivalente Signale übermittelt werden, wenn die Plausibilitätskontrolle auf eine solche Antivalenz eingerichtet ist. Antivalenz bedeutet, dass zu einem gegebenen Zeitpunkt die Signale/Datentelegramme genau gegengleich sind, d.h. z.B. 0 und 1. Auch andere Abwandlungen der Signale/Datentelegramme sind möglich, solange bei der Plausibilitätskontrolle bekannt ist, welcher Art diese Abwandlungen sind. Die Plausibilitätskontrolle erfolgt somit immer vor dem Hintergrund zusätzlicher hinterlegter Informationen bezüglich der schalttechnischen Zuordnung oder Bedeutung des Signals/Datentelegramms.

Grundsätzlich können verschiedene Modulationsverfahren angewendet werden, z.B. Amplitudenmodulation, Frequenzmodulation, Bandspreizmodulation, Pulsmodulation, ASK (Amplitude Shift Keying), FSK (Frequenz Shift Keying), PSK (Phase Shift Keying) oder QAM (Quadraturamplitudenmodulation). Besonders vorteilhaft wird in weiterer zusätzlicher oder alternativer Ausgestaltung des Verfahrens das Modulieren und Demodulieren mittels des Orthogonalen Frequenzmultiplexverfahrens (OFDM) durchgeführt. Das Adaptersystem ist vorteilhafterweise dementsprechend ausgerichtet. Bei diesem Verfahren werden mehrere orthogonale Träger zur Signalübertragung verwendet, so dass die Datenraten dieser mehreren Träger sich zu einer hohen Datenrate addieren. Das OFDM-Verfahren ermöglicht so eine besonders schnelle Signalübertragung mit einer Nutzdatenrate von bis zu 300 MB/s.

Eine Sicherheitssteuerung, ausgebildet zum gemäß einer Sicherheitsnorm sicheren Ein- und Ausschalten eines elektrischen Verbrauchers, ist erfindungsgemäß zum Zusammenwirken als Sender und/oder Empfänger in dem beschriebenen Verfahren ausgebildet und/oder umfasst vorteilhafterweise ein beschriebenes Adaptersystem. Dies kann z.B. über ein separates Modul der Sicherheitssteuerung realisiert sein, welches das Adaptersystem enthält. Das Adaptersystem kann aber auch integral in der Sicherheitssteuerung enthalten sein, z.B. als integrierter Schaltkreis.

Ein Feldgerät für eine Automatisierungsanlage, ist ebenfalls erfindungsgemäß zum Zusammenwirken als Sender und/oder Empfänger in dem beschriebenen Verfahren ausgebildet und/oder umfasst vorteilhafterweise ein beschriebenes Adaptersystem. Ein solches Feldgerät kann beispielsweise ein beliebiger Geber/Sensor, Aktor oder auch ein Feldverteiler sein.

Die mit der Erfindung erzielten Vorteile bestehen insbesondere darin, dass durch die Nutzung unterschiedlicher Leitungen einer Stromversorgung für die Aufmodulierung von redundanten Datentelegrammen das Prinzip der Redundanz auch bei Verwendung der Trägerfrequenztechnik uneingeschränkt angewendet werden kann. Damit ist auf technisch besonders einfache Weise ein hohes Sicherheitsniveau erreichbar. Daneben werden auch die sonstigen Vorteile der Trägerfrequenztechnik, nämlich die Einsparung von separater Verkabelung für die Datenübertragung, erzielt.

Insbesondere bei Verwendung OFDM als Übertragungstechnik können besonders hohe Datenraten erreicht werden. Alle über die Datentelegramme angesprochenen Knoten können dadurch mit IP-Adresse identifiziert werden. Alle Diagnosedaten können damit überwacht und abgespeichert werden, und es kann zentral festgestellt werden, wo ein Fehler auftritt. Eine vorbeugende Wartung kann auf diese Weise ebenfalls realisiert werden. Ferner können die Feldbusleitungen wie Ethernet oder AS-i bei den z.B. langen Förderstrecken eingespart werden, weil die sichere Datenkommunikation über Stromleitungen erfolgen kann.

Ausführungsbeispiele der Erfindung werden anhand von Zeichnungen näher erläutert. Darin zeigen:
- FIG 1: eine Prinzipskizze einer Datenverbindung zwischen einer Sicherheitssteuerung und Feldgeräten mittels Trägerfrequenztechnik,
- FIG 2: eine schematische Zeichnung zweier Adaptersysteme für eine Einphasenwechselstromversorgung, und
- FIG 3: eine schematische Zeichnung zweier Adaptersysteme für eine Dreiphasenwechselstromversorgung, und

Gleiche Teile sind in allen Zeichnungen mit denselben Bezugszeichen versehen.

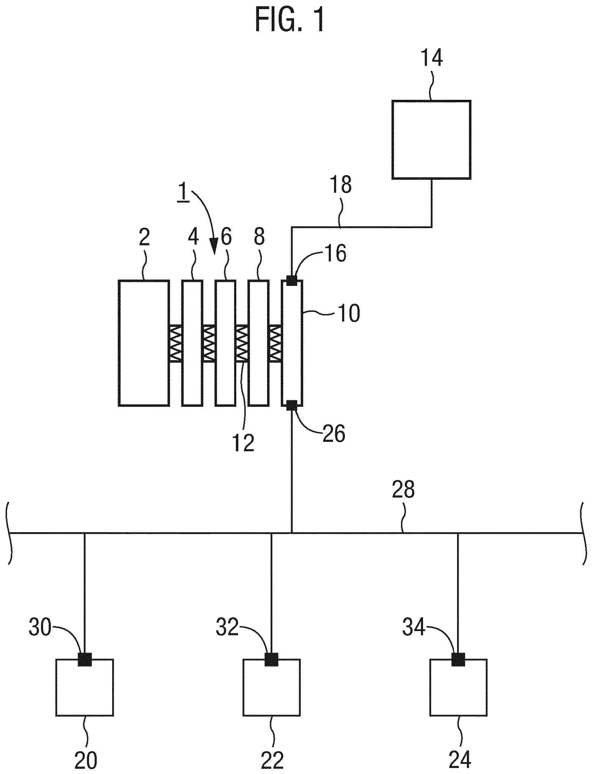

Die FIG 1 zeigt schematisch eine modulare Sicherheitssteuerung 1, umfassend ein Kopfmodul 2, mehrere Erweiterungsmodule 4, 6, 8, die in üblicher Weise z.B. zusätzliche Ein- und Ausgangsklemmen bereitstellen, sowie ein Kommunikationsmodul 10. Alle Module 2, 4, 6, 8, 10 sind über einen Rückwandbus 12 datenseitig miteinander verbunden. Im Kopfmodul 2 ist eine zentrale Steuereinheit angeordnet, die die Eingangssignale verarbeitet und daraus Ausgangssignale erzeugt. Die Sicherheitssteuerung 1 ist gemäß der Norm EN ISO 13849 ausgestaltet, so dass die Steuereinheit zwei nicht näher gezeigte, redundant arbeitende Mikrocontroller umfasst. Auch die Kommunikation auf dem Rückwandbus 12 verläuft in gemäß dieser Norm sicherer Weise, d.h. in der Regel redundant.

Das Kommunikationsmodul 10 dient der Kommunikation mit externen Systemen, z.B. einer übergeordneten speicherprogrammierbaren Steuerung 14. Hierzu weist das Kommunikationsmodul 10 einen Kommunikationsanschluss 16 auf, der - je nach verwendeter Schnittstelle - z.B. als RJ45-Buchse ausgestaltet sein kann. Über diesen Kommunikationsanschluss 16 kann die Sicherheitssteuerung 1 über eine Kommunikationsleitung 18 mit der speicherprogrammierbaren Steuerung 14 kommunizieren. Die Kommunikation kann dabei - je nach verwendetem Protokoll - sowohl sicher als auch nicht sicher erfolgen.

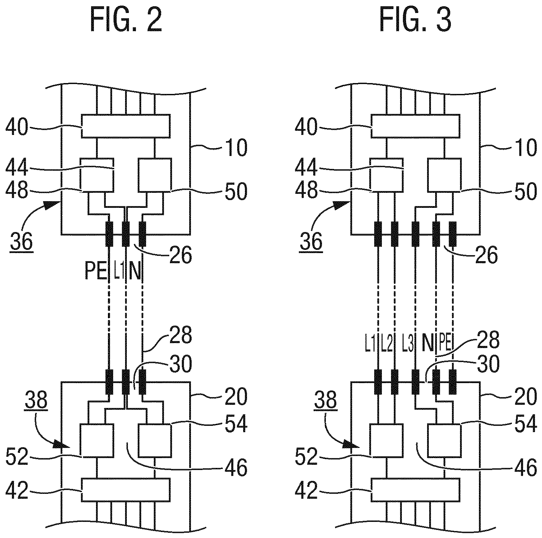

Um eine sichere Kommunikation auch zu Feldgeräten 20, 22, 24, z.B. in einer Automatisierungsanlage zu gewährleisten, weist das Kommunikationsmodul 10 ein noch in Bezug auf die FIG 2 und 3 näher beschriebenes, in der FIG 1 nicht vollständig gezeigtes Adaptersystem auf, welches einen Stromversorgungsanschluss 26 umfasst. Über diesen Stromversorgungsanschluss 26 ist das Kommunikationsmodul 10 und damit die Sicherheitssteuerung 1 an die gemeinsame Stromversorgung 28 aller Feldgeräte 20, 22, 24 der Automatisierungsanlage angeschlossen. Diese sind ebenfalls über jeweilige Stromversorgungsanschlüsse 30, 32, 34 mit der Stromversorgung 28 verbunden.

Die Sicherheitssteuerung 1 muss dabei nicht notwendigerweise selbst ihre Betriebsspannung von der Stromversorgung 28 beziehen, sondern kann - in anderen Ausführungsbeispielen - auch anderweitig mit Strom versorgt werden. Im hier beschriebenen Ausführungsbeispiel übernimmt das Kommunikationsmodul 10 beide Rollen als Gateway und Spannungsversorgung. D.h. das Kommunikationsmodul 10 versorgt alle anderen Module 2, 4, 6, 8 mit Betriebsspannung. Es dient damit neben der Kommunikationsfunktion als Netzgerät, welches die DC-Spannungsversorgung gewährleistet.

In noch weiteren Ausführungsbeispielen kann ein derartiges kombiniertes Kommunikations- und Spannungsversorgungsmodul nicht in der Art der übrigen Erweiterungsmodule 10, sondern als sogenanntes Standalone-Gerät realisiert, welches mit dem Steuerungssystem und Feldgeräten über die Stromversorgung 28 kommuniziert.

Die hier beschriebene Anordnung des Adaptersystems auf dem Kommunikationsmodul 10 ist rein beispielhaft. Die Modulanordnung und - ausgestaltung kann in anderen Ausführungsbeispielen anderweitig realisiert sein, so könnte beispielsweise ein entsprechendes Adaptersystem auch in eines der Erweiterungsmodule 4, 6, 8 integriert sein.

Die sichere Kommunikation zwischen Sicherheitssteuerung 1 und Feldgeräten 20, 22, 24 erfolgt nun mittels des Trägerfrequenzverfahrens über die Stromversorgung 28. Um dabei das notwendige Sicherheitsniveau zu erreichen, wird eine Zweikanaligkeit zur Verfügung gestellt, durch die zwei redundante Versionen eines Datentelegramms auf unterschiedlichen Kanälen übertragen werden. Dies erfolgt über unterschiedliche Leitungen der Stromversorgung 28, wie in Bezug auf die FIG 2 und FIG 3 erläutert wird.

Die FIG 2 zeigt Teile des Kommunikationsmoduls 10 und eines Feldgeräts 20 mit den jeweiligen Stromversorgungsanschlüssen 26, 30. Die Stromversorgungsanschlüsse 26, 30 sind ebenso wie die Stromversorgung 28 im Ausführungsbeispiel der FIG 2 als Einphasenwechselstrom ausgestaltet. Es sind somit drei Leitungen vorhanden: Außenleiter (L1), Neutralleiter (N) und Schutzleiter (PE). Im Ausführungsbeispiel können Kommunikationsmodul 10 und Feldgerät 20 sowohl als Sender als auch als Empfänger fungieren. In anderen Ausführungsbeispielen kann ein Feldgerät 20, welches z.B. ausschließlich als Sensor ausgebildet ist, jedoch beispielsweise ausschließlich als Sender fungieren und somit nur zum Senden, nicht zum Empfangen ausgebildet sein. Im folgenden wird die Funktionsweise aber anhand der erstgenannten symmetrischen Ausbildung erläutert.

Die Anordnung der in FIG 2 gezeigten Adaptersysteme 36, 38 des Kommunikationsmoduls 10 bzw. des Feldgeräts 20 dienen dazu, eine Signalübertragung zwischen Sicherheitssteuerung 1 und Feldgerät 20 auf sichere Weise zu ermöglichen. Die Sicherheit wird dabei durch Zweikanaligkeit, d.h. durch überprüfte Redundanz gewährleistet. Hierzu werden beim jeweiligen Sender redundante Signale zur Verfügung gestellt. Steuersignale, die im Kopfmodul 2 der Sicherheitssteuerung 1 erzeugt werden, werden z.B. in zwei Versionen unabhängig von zwei Mikroprozessoren erzeugt und über den Rückwandbus 12 an das Kommunikationsmodul 10 weitergegeben. Auf Seiten des Feldgerätes 20 können die redundanten Signale ebenso unabhängig erzeugt werden, z.B. durch zwei unabhängige Leitungen eines zweikanaligen Not-Aus-Schalters.

Die auf diese Weise zur Verfügung gestellten redundanten Signale werden in den Adaptersystemen 36, 38 jeweils in einer Prüfeinheit 40, 42 zyklisch auf Plausibilität kontrolliert. Hierzu sind in der jeweiligen Prüfeinheit 40, 42 ggf. Zusatzinformationen hinterlegt. So könnte ein Not-Aus-Schalter z.B. antivalente Signale zur Verfügung stellen, die im fehlerfreien Fall nicht gleich, sondern vielmehr stets unterschiedlich sein müssen. Nach der Plausibilitätskontrolle werden die Signale auf Seiten des jeweiligen Senders an eine Modulationsvorrichtung 44, 46 gegeben, die jeweils aus zwei unabhängigen Modulationseinheiten 48, 50, 52, 54 besteht. Jeweils eines der redundanten Signale wird dabei ein eine Modulationseinheit 48, 50, 52, 54 gegeben und in ein Datentelegramm übersetzt, welches auf die Stromversorgung 28 aufmoduliert wird. Hierbei sind die Modulationsvorrichtungen 44, 46 so ausgestaltet, dass die einzelnen Modulationseinheiten 48, 50, 52, 54 einer Modulationsvorrichtung 44, 46 auf unterschiedliche Leitungen bzw. Potentiale zwischen diesen Leitungen wirken. So ist jeweils die erste Modulationseinheit 48, 52 jeder Modulationsvorrichtung 44, 46 mit dem Außenleiter (L1) und dem Schutzleiter (PE) verbunden. Die jeweils zweite Modulationseinheit 50, 54 ist mit dem Außenleiter (L1) und dem Neutralleiter (N) verbunden. Damit werden die redundanten Versionen des Datentelegramms jeweis auf unterschiedliche Potentiale aufmoduliert (L1-PE und L1-N) und haben daher unabhängige Übertragungswege.

Die Demodulierung erfolgt entsprechend symmetrisch in den Modulationsvorrichtungen 44, 46. Die Datentelegramme werden empfängerseitig wieder demoduliert, auf Plausibilität in der Prüfeinheit 40, 42 geprüft und in Signale in einer für den jeweiligen Empfänger geeigneten Form übersetzt (z.B. Bussignale auf dem Rückwandbus 12).

Die Modulation und Demodulation erfolgt jeweils im OFDM-Verfahren, welches eine besonders hohe Datenrate erlaubt. In der Regel wird die Übertragung der Datentelegramme dabei in der Art einer Master/Slave-Architektur erfolgen, wobei das Kommunikationsmodul 10 der Sicherheitssteuerung 1 als Master fungiert, während die übrigen Feldgeräte 20, 22, 24 als Slaves fungieren. Es können ggf. aber auch mehrere Sicherheitssteuerungen 1 mit Kommunikationsmodulen 10 und Feldgeräten 20, 22, 24 miteinander verbunden sein. Dadurch können mehrere Master und mehrere Slaves entstehen.

In anderen, nicht dargestellten Ausführungsformen kann die Reihenfolge von Prüfeinheit 40, 42 und Modulationsvorrichtung 44, 46 vertauscht sein, so dass die Plausibilitätskontrolle auf Datentelegrammebene, d.h. nach Modulation oder vor Demodulation erfolgt.

Die FIG 3 zeigt eine weitere Ausführungsform, deren Unterschied zur FIG 2 darin besteht, dass die Stromversorgung 28 als Dreiphasenwechselstromversorgung ausgebildet ist. Diese weist fünf Leitungen auf, nämlich drei Außenleiter (L1, L2, L3), einen Neutralleiter (N) und einen Schutzleiter (PE). Dabei ist jeweils die erste Modulationseinheit 48, 52 jeder Modulationsvorrichtung 44, 46 mit zwei Außenleitern (L1, L2) verbunden. Die jeweils zweite Modulationseinheit 50, 54 ist mit dem dritten Außenleiter (L3) und dem Neutralleiter (N) verbunden. Damit werden auch hier die redundanten Versionen des Datentelegramms jeweis auf unterschiedliche Potentiale aufmoduliert (L1-L2 und L3-N) und haben daher unabhängige Übertragungswege und die Zweikanaligkeit ist gewährleistet.

In anderen Ausführungsbeispielen können auch andere Kombinationen von Leitungen sowohl für Einphasen- als auch für Dreiphasenwechselstrom verwendet werden. Wesentlich ist, dass mindestens drei Leitungen vorliegen und somit zumindest zwei unabhängige Potentiale für die Aufmodulation verwendet werden können.

### Bezugszeichenliste

- 1: Sicherheitssteuerung
- 2: Kopfmodul
- 4, 6, 8: Erweiterungsmodul
- 10: Kommunikationsmodul
- 12: Rückwandbus
- 14: speicherprogrammierbare Steuerung
- 16: Kommunikationsanschluss
- 18: Kommunikationsleitung
- 20, 22, 24: Feldgerät
- 26: Stromversorgungsanschluss
- 28: Stromversorgung
- 30, 32, 34: Stromversorgungsanschluss
- 36, 38: Adaptersystem
- 40, 42: Prüfeinheit
- 44, 46: Modulationsvorrichtung
- 48, 50, 52, 54: Modulationseinheit

- L1, L2, L3: Außenleiter
- N: Neutralleiter
- PE: Schutzleiter

## Patentansprüche

1. Sicherheitssteuerung (1), ausgebildet zum gemäß einer Sicherheitsnorm sicheren Ein- und Ausschalten eines elektrischen Verbrauchers, ausgebildet zur Gewährleistung der Sicherheit durch Zweikanaligkeit, d.h. durch überprüfte Redundanz, um eine sichere Kommunikation zu einem oder mehreren Feldgeräten (20, 22, 24) gemäß Anspruch 6 zu gewährleisten,
wobei die Sicherheitssteuerung (1) zwei Mikroprozessoren umfasst, die zur unabhängigen Erzeugung zweier redundanter Signale ausgebildet sind; **gekennzeichnet durch** ein Adaptersystem (36), umfassend einen Stromversorgungsanschluss (26, ) an eine Stromversorgung (28) und eine Modulationsvorrichtung (44), ausgebildet zum Modulieren eines Datentelegramms über eine Trägerfrequenz auf eine Spannung zwischen zwei Leitungen des Stromversorgungsanschlusses (26) und ausgebildet zum Demodulieren eines Datentelegramms über eine Trägerfrequenz aus einer Spannung zwischen zwei Leitungen des Stromversorgungsanschlusses (26),
wobei die Stromversorgung (28) mindestens drei Leitungen umfasst, und die Modulationsvorrichtung (44) zwei unabhängige Modulationseinheiten (48, 50) umfasst, und dazu ausgebildet ist, die unabhängig erzeugten, redundanten Signale in jeweils ein Datentelegramm zu übersetzen, so dass redundante Versionen des Datentelegramms bereitgestellt werden, und eine erste der zwei redundanten Versionen eines Datentelegramms auf eine Spannung zwischen einer ersten Leitung und einer zweiten Leitung der Stromversorgung (28) zu modulieren und aus einer solchen Spannung zu demodulieren, und eine zweite Version des Datentelegramms auf eine Spannung zwischen einer dritten Leitung und einer beliebigen weiteren, von der dritten Leitung unterschiedlichen Leitung der Stromversorgung (28) zu modulieren und aus einer solchen Spannung zu demodulieren.

2. Sicherheitssteuerung (1) nach Anspruch 1, bei der die Stromversorgung (28) als Einphasenwechselstromversorgung ausgelegt ist und die erste Leitung ein Außenleiter (L1) ist, die zweite Leitung ein Neutralleiter (N) ist, die dritte Leitung ein Schutzleiter (PE) ist, und die beliebige weitere Leitung ebenfalls der Außenleiter (L1) ist.

3. Sicherheitssteuerung (1) nach Anspruch 1, bei dem die Stromversorgung (28) als Dreiphasenwechselstromversorgung ausgelegt ist und die erste Leitung ein erster Außenleiter (L1) ist, die zweite Leitung ein zweiter Außenleiter (L2) ist, die dritte Leitung ein dritter Außenleiter (L3) ist, und die beliebige weitere Leitung ein Neutralleiter (N) ist.

4. Sicherheitssteuerung (1) nach einem der Ansprüche 1 bis 3, welche weiter dazu ausgebildet ist, eine Plausibilitätskontrolle der redundanten Signale durchzuführen.

5. Sicherheitssteuerung (1) nach einem der Ansprüche 1 bis 4, welche weiter dazu ausgebildet ist, das Modulieren und Demodulieren mittels des Orthogonalen Frequenzmultiplexverfahrens durchzuführen.

6. Feldgerät (20, 22, 24) für eine Automatisierungsanlage, ausgebildet zur Gewährleistung der Sicherheit durch Zweikanaligkeit, d.h. durch überprüfte Redundanz, um eine sichere Kommunikation zu der Sicherheitssteuerung (1) gemäß Anspruch 1 zu gewährleisten,
wobei das Feldgerät (20, 22, 24) zur unabhängigen Erzeugung zweier redundanter Signale ausgebildet sind;
**gekennzeichnet durch** ein Adaptersystem (38), umfassend einen Stromversorgungsanschluss (30, 32, 34) an eine Stromversorgung (28) und eine Modulationsvorrichtung (46), ausgebildet zum Modulieren eines Datentelegramms über eine Trägerfrequenz auf eine Spannung zwischen zwei Leitungen des Stromversorgungsanschlusses (30, 32, 34) und ausgebildet zum Demodulieren eines Datentelegramms über eine Trägerfrequenz aus einer Spannung zwischen zwei Leitungen des Stromversorgungsanschlusses (30, 32, 34),
wobei die Stromversorgung (28) mindestens drei Leitungen umfasst, und die Modulationsvorrichtung (46) zwei unabhängige Modulationseinheiten (52, 54) umfasst, und dazu ausgebildet ist, die unabhängig erzeugten, redundanten Signale in jeweils ein Datentelegramm zu übersetzen, so dass redundante Versionen des Datentelegramms bereitgestellt werden, und eine erste der zwei redundanten Versionen eines Datentelegramms auf eine Spannung zwischen einer ersten Leitung und einer zweiten Leitung der Stromversorgung (28) zu modulieren und aus einer solchen Spannung zu demodulieren, und eine zweite Version des Datentelegramms auf eine Spannung zwischen einer dritten Leitung und einer beliebigen weiteren, von der dritten Leitung unterschiedlichen Leitung der Stromversorgung (28) zu modulieren und aus einer solchen Spannung zu demodulieren.

## Claims

1. A safety controller (1) designed to switch an electrical load on and off safely in accordance with a safety standard, designed to ensure safety by being dual-channel, i.e. by verified redundancy, in order to ensure safe communication to one or more field devices (20, 22, 24) according to claim 6,
wherein the safety controller (1) comprises two microprocessors adapted to independently generate two redundant signals;
**characterized by** an adapter system (36) comprising a power supply connector (26, ) to a power supply (28) and a modulation device (44) adapted to modulate a data telegram over a carrier frequency onto a voltage between two lines of the power supply connector (26) and adapted to demodulate a data telegram over a carrier frequency from a voltage between two lines of the power supply connector (26),
wherein the power supply (28) comprises at least three lines, and the modulation device (44) comprises two independent modulation units (48, 50) and is adapted to translate the independently generated redundant signals into one data telegram each, so that redundant versions of the data telegram are provided and to modulate a first of the two redundant versions of a data telegram to a voltage between a first line and a second line of the power supply (28) and to demodulate from such voltage, and to modulate a second version of the data telegram to a voltage between a third line and any further line of the power supply (28) different from the third line and to demodulate from such voltage.

2. The safety controller (1) according to claim 1, wherein the power supply (28) is a single-phase AC power supply and the first line is an outer conductor (L1), the second line is a neutral conductor (N), the third line is a protective conductor (PE), and any further line is also the outer conductor (L1).

3. The safety controller (1) according to claim 1, wherein the power supply (28) is designed as a three-phase AC power supply and the first line is a first outer conductor (L1), the second line is a second outer conductor (L2), the third line is a third outer conductor (L3), and any further line is a neutral conductor (N).

4. The safety controller (1) according to any one of claims 1 to 3, which is further adapted to perform a plausibility check of the redundant signals.

5. The safety controller (1) according to any one of claims 1 to 4, which is further adapted to perform the modulating and demodulating by means of the orthogonal frequency division multiplexing method.

6. A field device (20, 22, 24) for an automation system, designed to ensure safety by being dual-channel, i.e. by means of verified redundancy, in order to ensure safe communication to the safety controller (1) according to claim 1,
wherein the field device (20, 22, 24) is adapted to independently generate two redundant signals;
**characterized by** an adapter system (38) comprising a power supply connector (30, 32, 34) to a power supply (28) and a modulation device (46) adapted to modulate a data telegram over a carrier frequency to a voltage between two lines of the power supply connector (30, 32, 34) and adapted to demodulate a data telegram over a carrier frequency from a voltage between two lines of the power supply connector (30, 32, 34),
wherein the power supply (28) comprises at least three lines, and the modulation device (46) comprises two independent modulation units (52, 54) and is adapted to translate the independently generated redundant signals into one data telegram each, so that redundant versions of the data telegram are provided and to modulate a first of the two redundant versions of a data telegram to a voltage between a first line and a second line of the power supply (28) and to demodulate from such voltage, and to modulate a second version of the data telegram to a voltage between a third line and any further line of the power supply (28) different from the third line and to demodulate from such voltage.

## Revendications

1. Un contrôleur de sécurité (1) conçu pour mettre en service ou hors service une charge électrique en sécurité suivant une norme de sécurité, conçu pour assurer une sécurité au moyen d'un double canal, c'est-à-dire au moyen d'un redondance vérifiée, afin d'assurer une communication sécurité vers un ou plusieurs dispositifs de terrains (20, 22, 2) suivant la revendication 6,
dans lequel le contrôleur de sécurité (1) comporte deux microprocesseurs adaptés pour générer de manière indépendante deux signaux redondants;
**caractérisé par** un système d'adaptation (36) comprenant un connecteur d'alimentation électrique (26) vers une alimentation électrique (28) et un dispositif de modulation (44) adapté pour moduler un télégramme de données sur une fréquence porteuse entre deux lignes du connecteur d'alimentation électrique (26) et adapté pour démoduler un télégramme de données sur une fréquence porteuse depuis une tension entre deux lignes du connecteurs d'alimentation électrique (26),
dans lequel l'alimentation électrique (28) comporte au moins trois lignes, et le dispositif de modulation (44) comporte deux unités de modulation indépendantes (48, 50) et est adapté à la conversion des deux signaux redondants générés indépendamment en un télégramme de données chacun, de telle sorte que des versions redondantes du télégramme de données sont fournies et pour moduler une première des deux versions redondantes d'un télégramme de données en une tension entre une première ligne et une seconde ligne de l'alimentation électrique (28) et la démodulation d'une telle tension, et pour moduler une seconde version du télégramme de données en une tension entre une troisième ligne et toute autre ligne de l'alimentation électrique (28) distincte de la troisième ligne et pour la démodulation d'une telle tension.

2. Le contrôleur de sécurité (1) selon la revendication 1, dans lequel l'alimentation électrique (28) est une alimentation électrique AC monophasée et la première ligne est un conducteur de ligne (L1), la deuxième ligne est un conducteur neutre (N), la troisième ligne est un conducteur de protection conducteur (PE), et toute autre ligne est également le conducteur extérieur (L1).

3. Le contrôleur de sécurité (1) selon la revendication 1, dans lequel l'alimentation électrique (28) est réalisée sous la forme d'une alimentation en courant alternatif triphasé et la première ligne est un premier conducteur extérieur (L1), la deuxième ligne est un deuxième conducteur extérieur (L2), le la troisième ligne est un troisième conducteur extérieur (L3) et toute autre ligne est un conducteur neutre (N).

4. Le contrôleur de sécurité (1) selon l'une quelconque des revendications 1 à 3, qui est en outre adapté pour réaliser un test de vraisemblance des signaux redondants.

5. Le contrôleur de sécurité (1) selon l'une quelconque des revendications 1 à 4, qui est en outre adapté pour moduler et démoduler au moyen d'une méthode de multiplexage par division de fréquence orthogonale.

6. Un système de terrain (20, 22, 24) pour un système automatique, conçu pour assurer une sécurité au moyen d'un double canal, c'est-à-dire au moyen d'une redondance vérifiée, afin d'assurer une communication sécurisée vers le contrôleur de sécurité suivant la revendication 1,
dans lequel le dispositif de terrain (20, 22, 24) est adapté pour générer indépendamment deux signaux redondants ;
**caractérisé par** un système d'adaptation (38) comprenant un connecteur d'alimentation électrique (30, 32, 34) vers une alimentation électrique (28) et un dispositif de modulation (46) adapté pour moduler un télégramme de données sur une fréquence porteuse vers une tension entre deux lignes du connecteur d'alimentation électrique (30, 32, 34) et adapter pour démoduler un télégramme de données sur un fréquence porteuse depuis une tension entre deux lignes du connecteurs d'alimentation électriques (30, 32, 34),
dans lequel l'alimentation électrique (28) comporte au moins trois lignes, et le dispositif de modulation (46) comporte deux unités de modulation indépendantes (52, 55) et est adapté à la conversion des deux signaux redondants générés indépendamment en un télégramme de données chacun, de telle sorte que des versions redondantes du télégramme de données sont fournies et pour moduler une première des deux versions redondantes d'un télégramme de données en une tension entre une première ligne et une seconde ligne de l'alimentation électrique (28) et la démodulation d'une telle tension, et pour moduler une seconde version du télégramme de données en une tension entre une troisième ligne et toute autre ligne de l'alimentation électrique (28) distincte de la troisième ligne et pour la démodulation d'une telle tension.
